# FASCICULE DE BREVET EUROPEEN

(11) **EP 4 307 521 B1**
(45) Date de publication et mention de la délivrance du brevet: **17.06.2026**
(21) Numéro de dépôt: 23185248.4
(22) Date de dépôt: 13.07.2023
(51) Int. Cl.: H02J 7/00, G04C 10/02, H02J 7/34, H02J 7/35, G04G 19/10, G04G 19/12, H02J 7/50

(54) **HORLOGE À SUPER-CONDENSATEUR**
SUPERKONDENSATORUHR
SUPERCAPACITOR CLOCK

(30) Priorité: 13.07.2022 FR 2207246
(43) Date de publication de la demande: 17.01.2024
(73) Titulaire: Bodet Time & Sport, 49340 Trementines (FR)
(72) Inventeur: LAVAUD, Bruno, 44690 Château Thébaud (FR)
(74) Mandataire: Gevers & Orès

(56) Documents cités:
- CN-A- 112 255 908
- CN-B- 110 114 261
- US-A1- 2013 194 898
- US-A1- 2016 291 683
- US-A1- 2019 094 384

## Description

### Domaine technique de l'invention

La présente invention concerne une horloge à super-condensateur.

### Arrière-plan technologique

La demande de brevet US 2010 0084006 A1 décrit une horloge comportant :
- un système de suivi et d'affichage de l'heure ;
- un super-condensateur ;
- un panneau photovoltaïque ; et
- un système de charge conçu pour charger le super-condensateur à partir du panneau photovoltaïque,

Le panneau photovoltaïque est utilisé pour charger le super-condensateur. Ainsi, en l'absence d'éclairage, le super-condensateur se décharge pour alimenter électriquement le système de suivi et d'affichage de l'heure. Lorsque l'éclairage revient, le super-condensateur est à nouveau chargé à partir du panneau photovoltaïque. Ainsi, le super-condensateur subit un nombre élevé de cycles de charge/décharge. Par exemple, lorsque l'horloge est utilisée en intérieur, dans une pièce principalement éclairée par une lumière artificielle, chaque fois qu'une personne allume puis éteint cette lumière, elle provoque un cycle de charge/décharge du super-condensateur.

Or, ces cycles de charge/décharge détériorent le super-condensateur, ce qui diminue sa capacité. Cette baisse de capacité n'est pas nécessairement gênante en utilisation habituelle de l'horloge, c'est-à-dire lorsqu'elle est fréquemment éclairée pour permettre la recharge du super-condensateur.

En revanche, la réduction de la capacité du super-condensateur concomitante avec une longue utilisation de l'horloge, entraîne une baisse importante de la durée de fonctionnement de l'horloge en l'absence d'éclairage, avant qu'elle ne s'éteigne. Or, suite à l'extinction de l'horloge, un retour de l'éclairage n'est pas suffisant pour que l'horloge soit fonctionnelle. Il faut en effet en outre qu'elle soit remise à l'heure, soit manuellement soit par synchronisation externe, et cette remise à l'heure prend un certain temps.

Par ailleurs, la demande de brevet américain publiée sous le numéro US 2016/261683 A1 décrit un dispositif informatique, comme une montre, comportant plusieurs batteries, un chargeur et un module de gestion de puissance conçu pour gérer la charge/décharge des batteries suivant une politique (« *control policy* ») sélectionnée. La demande de brevet chinois publiée sous le numéro CN 112 255 908 A décrit une horloge équipée d'un supercondensateur.

Il peut ainsi être souhaité de prévoir une horloge qui garde une bonne durée de fonctionnement en l'absence d'éclairage, même après avoir été utilisée longtemps.

### Résumé de l'invention

Il est donc proposé une horloge selon la revendication 1.

Grâce à l'invention, le deuxième super-condensateur n'est utilisé que lorsque le premier super-condensateur ne comporte plus beaucoup d'énergie. Ainsi, en fonctionnement habituel, avec un éclairage fréquent permettant de maintenir un niveau élevé d'énergie dans le premier super-condensateur et donc une tension d'alimentation supérieure au seuil prédéfini, le deuxième super-condensateur n'est pas sollicité. De cette manière, le nombre de cycles de charge/décharge du deuxième super-condensateur est réduit, de sorte que sa capacité diminue peu avec le temps. En cas d'absence d'éclairage prolongé se traduisant par une tension d'alimentation sous le seuil prédéfini, ce deuxième super-condensateur est alors utilisé, et peut maintenir en fonctionnement l'horloge, même lorsque cette dernière est utilisée depuis longtemps, grâce à sa capacité peu dégradée.

L'invention peut en outre comporter l'une ou plusieurs des caractéristiques optionnelles énoncées dans les revendications 2 à 11, selon toute combinaison techniquement possible.

### Brève description des figures

L'invention sera mieux comprise à l'aide de la description qui va suivre, donnée uniquement à titre d'exemple et faite en se référant aux figures suivantes :
- la figure 1 est une vue fonctionnelle simplifiée d'une horloge selon l'invention, et
- la figure 2 regroupe des chronogrammes illustrant l'évolution au cours du temps de grandeurs physiques lors d'un exemple de fonctionnement de l'horloge.

### Description détaillée de l'invention

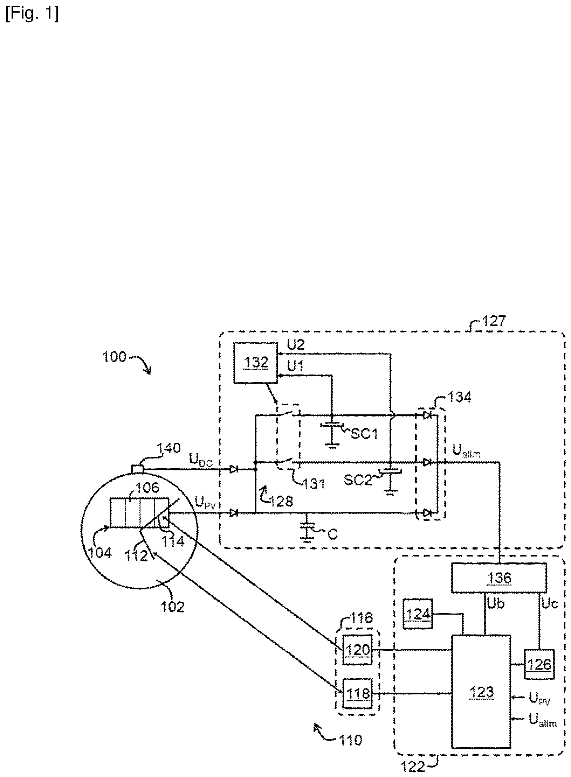

En référence à la figure 1, une horloge 100 selon l'invention va à présent être décrite.

L'horloge 100 est par exemple une horloge murale comportant des moyens de fixation à un mur, par exemple par vissage.

L'horloge 100 comporte tout d'abord un cadran 102. Le cadran 102 est par exemple circulaire avec un diamètre compris par exemple entre 20 cm et 40 cm, par exemple 30 cm. Le cadran 102 présente une face avant où l'heure est destinée à être indiquée, et une face arrière, par exemple conçue pour être plaquée contre le mur.

Un ajour 104 est par exemple prévu dans le cadran 102 et l'horloge 100 comporte en outre un panneau photovoltaïque 106 par exemple disposée dans l'ajour 104 pour apparaître sur la face avant du cadran 102. Le panneau photovoltaïque 106 est conçu pour fournir un courant d'autant plus important que l'éclairage est élevé, mais qui s'annule très rapidement après une tension limite. De préférence, le panneau photovoltaïque 106 est organique (de l'anglais « Organic Photovoltaic »), c'est-à-dire qu'il est réalisé à base d'électronique organique (de l'anglais « organic electronics »). En plus de l'avantage environnemental, ce type de panneau photovoltaïque présente l'avantage que, lorsqu'une résistance est connectée en sortie du panneau photovoltaïque, la tension aux bornes de cette résistance varie sensiblement linéairement avec la luminosité.

L'horloge 100 comporte en outre un système 110 d'affichage de l'heure. Ce système d'affichage 110 comporte par exemple des aiguilles 112, 114 placées sur la face avant du cadran 102 et conçues pour se déplacer sur la face avant du cadran 102 pour indiquer l'heure. Plus précisément, il est de préférence prévu seulement deux aiguilles : une aiguille des heures 112 et une aiguille des minutes 114. Le système d'affichage 110 est ainsi de préférence dépourvu d'aiguille des secondes. L'absence d'aiguille des secondes permet d'économiser de l'énergie électrique.

Le système d'affichage 110 comporte en outre une motorisation 116 conçue pour déplacer les aiguilles 112, 114. Cette motorisation 116 comporte par exemple un moteur 118 pour l'aiguille des heures 112 et un autre moteur 120 pour l'aiguille des minutes 114. Les moteurs 118, 120 sont de préférence des moteurs pas à pas. Par exemple, en l'absence d'aiguille des secondes, l'aiguille des minutes 114 est conçue pour prendre 60 positions successives, tandis que l'aiguille des heures 112 est conçue pour prendre 480 positions successives (20 positions par heure).

L'horloge 100 comporte en outre un système 122 de suivi de l'heure conçu pour commander le système d'affichage 110 pour périodiquement mettre à jour l'affichage de l'heure. Cette commande inclut par exemple l'alimentation du système d'affichage 110. Ainsi, l'alimentation des moteurs 118, 120 est par exemple réalisée au travers du système de suivi 122.

Le système de suivi 122 comporte par exemple une unité 123 de traitement de données, comme un microcontrôleur, par exemple conçue pour fonctionner à une certaine tension nominale, par exemple autour de 1,8 V.

Le système de suivi 122 comporte en outre une horloge locale 124, par exemple à quartz. L'horloge locale 124 est conçue pour fournir l'heure et de préférence la date à l'unité de traitement 123. Par exemple, l'horloge locale 124 est alimentée au travers de l'unité de traitement 123. L'horloge locale 124 est par exemple conçue pour fonctionner à une certaine tension nominale, par exemple autour de 1,6 V. L'horloge locale 124 comporte en outre une mémoire volatile, dans laquelle se trouve un bit de fiabilité auquel l'unité de traitement 123 à accès en écriture et en lecture. Au contraire, l'horloge locale 124 est par exemple conçue pour ne pas pouvoir accéder en écriture à ce bit de fiabilité. Ainsi, l'unité de traitement 123 est conçue pour écrire la valeur « un » dans le bit de fiabilité, qui reste donc à cette valeur tant que l'horloge locale 124 est alimentée électriquement. En revanche, lorsque l'horloge locale 124 n'est plus alimentée, le bit de fiabilité repasse à la valeur « zéro », du fait de la volatilité de la mémoire. Ainsi, la lecture du bit de fiabilité permet de savoir si l'horloge locale 124 est restée allumée ou non.

Pour s'assurer de l'exactitude de l'heure malgré une dérive possible de l'horloge locale 124, le système de suivi 122 comporte en outre un module 126 de synchronisation sans fil. Le module de synchronisation 126 est conçu, sur demande, pour recevoir un message de synchronisation, tel que Wireless DHF & Radio ALS162 (ex-France Inter) et DCF (émetteur Allemand), à partir d'une horloge externe, également appelée horloge mère. L'unité de traitement 123 est ainsi conçue pour périodiquement utiliser le module de synchronisation 126 pour se synchroniser à l'horloge externe.

Par exemple, l'unité de traitement 123 est par défaut conçue pour se synchroniser à l'horloge externe à des instants de synchronisation prédéfinis. Par exemple, au moins deux instants de synchronisation sont prévus par jour, de préférence un la nuit (de 19h à 7h), par exemple à 4h00, et un le jour (de 7h à 19h), par exemple à 16h00.

De préférence, l'unité de traitement 123 est conçue, à chaque instant de synchronisation, pour tenter de se synchroniser un nombre prédéfini de fois (par exemple trois fois). En cas d'échec à toutes les tentatives, l'unité de traitement 123 est conçue pour incrémenter un compteur d'échec associé à l'instant de synchronisation considéré. Le compteur est réinitialisé à zéro lorsqu'une tentative de synchronisation aboutit. Lorsque le compteur atteint une valeur prédéfinie, par exemple 10 échecs, l'instant de synchronisation est décalé d'un intervalle de temps prédéfini, par exemple de +30 minutes et le compteur associé est réinitialisé à zéro.

Ainsi, il est possible de déterminer, en utilisation réelle, le meilleur moment pour réaliser la synchronisation à l'horloge externe, par exemple le moment avec le moins d'interférence sur un canal de communication sans fil utilisé par le module de synchronisation 126.

De préférence également, l'unité de traitement 123 est conçue, lorsque les deux compteurs des deux instants de synchronisation journaliers restent à zéro pendant une période de temps prédéfinie d'au moins deux jours, par exemple une semaine, pour cesser de se synchroniser à l'un des deux instants de synchronisation, de préférence celui de la journée. Ainsi, l'unité de traitement 123 n'essaiera de se synchroniser qu'à l'instant de synchronisation de la nuit (4h00 par défaut). Lorsque le compteur associé à l'instant de synchronisation maintenu atteint une valeur prédéfinie, par exemple dès le premier échec, l'unité de traitement 123 est par exemple conçue pour essayer à nouveau de se synchroniser à l'instant de synchronisation qui avait été abandonné. Dans ce dernier cas, les deux compteurs des deux instants de synchronisation sont de préférence réinitialisés à zéro.

En diminuant ainsi le nombre d'instants de synchronisation, de l'énergie électrique est économisée, ce qui améliore l'autonomie de l'horloge 100.

Par ailleurs, l'unité de traitement 123 peut en outre être conçue pour mesurer une luminosité ambiante E de l'horloge 100 et pour commander le système d'affichage 110 afin d'afficher la luminosité mesurée en utilisant une des aiguilles 112, 114. Par exemple, l'unité de traitement 123 est conçue pour connecter une résistance de valeur connue en sortie du panneau photovoltaïque et pour mesurer une tension présentée par cette résistance. De préférence, l'aiguille déplacée pour afficher la luminosité est l'aiguille des minutes 114. Par exemple, la luminosité est égale à l'heure de la position horaire de l'aiguille multipliée par un facteur prédéfini. Ce facteur vaut par exemple 100, de sorte que l'aiguille des minutes 114 est positionnée à 1h pour indiquer 100 Lux, à 2h pour indiquer 200 Lux et ainsi de suite. De préférence, pendant l'affichage de la luminosité ambiante, l'aiguille des heures 112 est placée à une position horaire prédéfinie, par exemple à midi. L'horloge 100 présente par exemple un bouton actionnable (non représenté) par un utilisateur pour lancer la mesure et l'affichage de la luminosité ambiante.

L'utilisation d'un panneau photovoltaïque organique est avantageuse car, du fait de la relation linéaire entre la tension de la résistance et la luminosité ambiante, cette dernière peut facilement (et donc à moindre coût énergétique) être calculée par l'unité de traitement 123.

Le système de suivi 122 est conçu pour recevoir une tension d'alimentation Uₐₗᵢₘ. Pour alimenter ses différents éléments, le système de suivi 122 comporte par exemple un étage d'entrée 136 conçu pour abaisser et réguler la tension d'alimentation Uₐₗᵢₘ pour fournir une ou plusieurs tensions d'alimentation locales. Par exemple, l'étage d'entrée 136 est conçu pour fournir une tension d'alimentation locale Ub pour l'unité de traitement 123 et une tension d'alimentation locale Uc pour le module de synchronisation 126. La tension Ub est régulée à une valeur nominale (par exemple 1,8 V) lorsque la tension d'alimentation Uₐₗᵢₘ est suffisante, c'est-à-dire supérieure à cette valeur nominale. Lorsque la tension d'alimentation Uₐₗᵢₘ est inférieure à cette valeur nominale, la tension Ub est sensiblement égale à la tension d'alimentation Uₐₗᵢₘ. De manière similaire, la tension Ub est régulée à une valeur nominale, par exemple supérieure à celle de l'unité de traitement 123 (par exemple 2,2 V), lorsque la tension d'alimentation Uₐₗᵢₘ est suffisante, c'est-à-dire supérieure à cette valeur nominale. Lorsque la tension d'alimentation Uₐₗᵢₘ est inférieure à cette valeur nominale, la tension Ub est sensiblement égale à la tension d'alimentation Uₐₗᵢₘ. Ainsi, si la tension d'alimentation Uₐₗᵢₘ vaut 2 V, la tension Ub vaut 1,8 V et la tension Uc vaut 2 V. Si la tension d'alimentation Uₐₗᵢₘ vaut 1,7 V, la tension Ub vaut 1,7 V et la tension Uc vaut 1,7 V.

L'horloge 100 comporte en outre un système d'alimentation électrique 127 conçu pour alimenter électriquement le système de suivi 122 et en particulier lui fournir la tension d'alimentation Uₐₗᵢₘ.

Le système d'alimentation électrique 127 comporte des premier et deuxième super-condensateurs SC1, SC2 pour stocker de l'énergie. L'horloge 100 peut ainsi continuer à fonctionner pendant un certain temps en l'absence de lumière, tout en étant dépourvue de réservoir d'énergie électrique électrolytique ou électrochimique, tels que des piles, des batteries, des condensateurs électrochimiques. De préférence, les super-condensateurs SC1, SC2 sont des super-condensateurs électrostatiques, sans électrolyte liquide ou solide. De manière générale, un super-condensateur est un condensateur présentant par exemple une densité de puissance comprise entre 500 et 10 000 W/kg, généralement entre 1 000 et 5 000 W/kg, et/ou une densité d'énergie comprise entre 0,5 et 50 Wh/kg, généralement entre 4 et 6 Wh/kg.

Le système d'alimentation électrique 127 comporte en outre un système 128 de charge des super-condensateurs SC1, SC2 à partir du panneau photovoltaïque 106.

Plus précisément, le système de charge 128 comporte un commutateur 131 pour connecter le panneau photovoltaïque 106 sélectivement à chacun des super-condensateurs SC1, SC2. Le commutateur 131 comporte par exemple deux interrupteurs reliant respectivement les super-condensateurs SC1, SC2 au panneau photovoltaïque 106. Le système de charge 128 comporte en outre un contrôleur 132 conçu pour commander le commutateur 131 en fonction des tensions U1, U2 des super-condensateurs SC1, SC2. Plus précisément, le contrôleur 132 est conçu pour connecter le panneau photovoltaïque 106 au premier super-condensateur SC1 (en maintenant le deuxième super-condensateur déconnecté) pour charger ce dernier, tant que sa tension U1 est inférieure à une tension maximale U1max. Le contrôleur 132 est en outre conçu pour connecter le panneau photovoltaïque 106 au deuxième super-condensateur SC2, à la place du premier super-condensateur SC1, lorsque la tension U1 de ce dernier atteint la tension maximale U1max, par exemple 5 V. Le contrôleur 132 est en outre conçu pour arrêter la charge du deuxième super-condensateur SC2 lorsque sa tension U2 atteint une tension maximale U2max, inférieure à la tension maximale U1max. En outre, la tension maximale U2max est de préférence inférieure, par exemple au moins 20% inférieure, à une tension nominale du deuxième super-condensateur SC2. Le contrôleur 132 est en outre conçu pour connecter le panneau photovoltaïque 106 au premier super-condensateur SC1, à la place du deuxième super-condensateur SC2, lorsque la tension U1 atteint une tension minimale U1min, par exemple 3,5 V, même si le deuxième super-condensateur SC2, n'est pas encore charge à sa tension maximale U2max. Ainsi, la priorité de la charge est donnée au premier super-condensateur SC1.

Le système d'alimentation électrique 127 comporte en outre une capacité C connectée au panneau photovoltaïque 106 pour permettre une alimentation directe (sans passer par les super-condensateurs SC1, SC2) du système de suivi 122.

Le système d'alimentation électrique 127 comporte en outre par exemple un mélangeur 134 conçu pour connecter au système de suivi 122, celui ou bien ceux parmi les super-condensateurs SC1, SC2 et la capacité C, présentant la tension la plus élevée. Cette tension la plus élevée forme ainsi la tension d'alimentation Uₐₗᵢₘ.

Par exemple, le mélangeur 134 comporte une diode pour chacun des super-condensateurs SC1, SC2 et de la capacité C, passante en direction du système de suivi 122.

En l'absence d'éclairement de sorte que la tension de la capacité C est nulle, lorsque la tension U1 est supérieure à la tension U2, le mélangeur 134 connecte le premier super-condensateur SC1, mais pas le deuxième super-condensateur SC2, au système de suivi 122 et, par son intermédiaire, au système d'affichage 110, pour alimenter électriquement ces derniers à partir du premier super-condensateur SC1. Lorsque la tension U1 est égale à la tension U2, le mélangeur 134 connecte le deuxième super-condensateur SC2 en plus du premier super-condensateur SC1 au système de suivi 122 et, par son intermédiaire, au système d'affichage 110 pour alimenter électriquement ces derniers à partir des premier et deuxième super-condensateurs SC1, SC2. Ainsi, le deuxième super-condensateur SC2 n'est utilisé que lorsque le premier super-condensateur SC1 est déchargé. Avec cette stratégie de charge, le premier super-condensateur SC1 présente un nombre de cycles de charge et décharge augmentant dans le temps, tandis que le deuxième super-condensateur SC2, sollicité moins souvent que le premier super-condensateur SC1, présente un nombre de cycles de charge et décharge augmentant beaucoup plus lentement. Ainsi, le deuxième super-condensateur SC2 s'use moins vite que le premier super-condensateur SC1. Ainsi, en période d'obscurité prolongée, lorsque le deuxième super-condensateur SC2 est sollicité, son usure est faible et permet à l'horloge 100 de tenir longtemps.

Dans l'exemple illustré où des diodes sont utilisées, il est apparent que le mélangeur 134 ne peut mettre en œuvre qu'uniquement la stratégie de charge décrit ci-dessus, mais pas d'autre stratégie de charge. De ce fait, cette stratégie de charge est mise en œuvre indépendamment d'une différence de nombres de cycles de charge et décharge entre les premier et deuxième super-condensateurs SC1, SC2. En outre, la stratégie de charge est mise en œuvre quelques soient les nombres de cycles de charge et décharge des premier et deuxième super-condensateurs SC1, SC2, en particulier lorsque le nombre de cycles de charge et décharge du premier super-condensateur SC1 est supérieur à un nombre de cycles de charge et décharge du deuxième super-condensateur SC2, par exemple supérieur de 50%, par exemple encore supérieur de 100% (double de celui du deuxième super-condensateur SC2).

Le système de charge 128 peut en outre comporter un connecteur externe 140, comme par exemple un port USB (de l'anglais « Universal Serial Bus »), connecté au système de charge 128. Le connecteur externe 140 est conçu pour être connecté à un réseau électrique externe (non représentée), pour remplacer et/ou compléter le panneau photovoltaïque 106. Le connecteur externe 140 est alors conçu pour fournie une tension U_{DC}, par exemple continue, par exemple 5 V en particulier dans le cas d'un port USB.

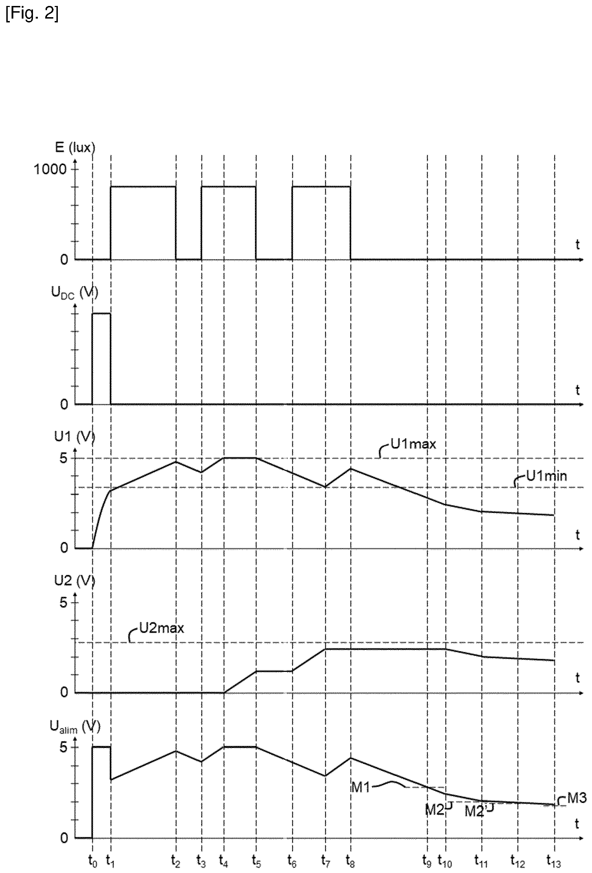

En référence à la figure 2, un exemple de fonctionnement de l'horloge 100 va à présent être décrit.

L'horloge 100 est supposée initialement neuve, dans un emballage. Ainsi, du fait de l'absence d'éclairage dans l'emballage, les super-condensateurs SC1, SC2, sont complètement déchargés.

À un instant t₀, l'horloge 100 est sortie de son emballage et branchée par son connecteur externe 140 à un réseau électrique externe. Comme la tension U1 est inférieure à U1max, le commutateur 131 connecte le panneau photovoltaïque 106 au premier super-condensateur SC1, de sorte que le panneau photovoltaïque 106 charge le super-condensateur SC1 à partir du réseau électrique et la tension U1 augmente. Par ailleurs, la capacité C est très rapidement chargée à partir du réseau électrique externe (généralement en moins de dix secondes), de sorte que la tension d'alimentation Uₐₗᵢₘ devient très rapidement égale à la tension U_{DC} du connecteur externe 140.

Ainsi, l'unité de traitement 123 et le module de synchronisation 126 s'allument, car alimentés au travers de la capacité C.

Une fois allumée, l'unité de traitement 123 détermine que l'heure fournie par l'horloge locale 124 n'est pas fiable, par exemple en détectant que le bit de fiabilité est à « zéro ». En conséquence, l'unité de traitement 123 sollicite le module de synchronisation 126 pour recevoir l'heure, met à jour l'horloge locale 124 à partir de l'heure reçue et commande le système d'affichage 110 pour afficher l'heure reçue.

À un instant t₁, le connecteur externe 140 est ensuite débranché du réseau externe, par exemple pour fixer l'horloge 100 dans sa position d'utilisation, par exemple contre un mur.

L'horloge 100 est supposée éclairée à partir de l'instant t1, et le premier super-condensateur SC1 est alors chargé par le panneau photovoltaïque 106. Pendant la charge, le système de suivi 122 est alimenté électriquement par l'intermédiaire du premier super-condensateur SC1 et/ou directement par l'intermédiaire de la capacité C.

À un instant t₂, l'éclairage s'arrête et le premier condensateur SC1 se décharge pour alimenter électriquement le système de suivi 122.

À un instant t₃, l'éclairage revient le premier super-condensateur SC1 est alors chargé par la panneau photovoltaïque 106. Pendant la charge, le système de suivi 122 est alimenté électriquement par l'intermédiaire du premier super-condensateur SC1 et/ou directement par l'intermédiaire de la capacité C.

À un instant t₄, la tension U1 atteint sa tension maximale U1max (par exemple 5 V). Le contrôleur 132 le détecte et commande le commutateur 131 pour connecter le panneau photovoltaïque 106 au deuxième super-condensateur SC2 à la place du premier super-condensateur SC1. Le deuxième super-condensateur SC2 est alors chargé à partir du panneau photovoltaïque 106.

À un instant t₅, l'éclairage s'arrête et le premier condensateur SC1 se décharge pour alimenter électriquement le système de suivi 122.

À un instant t₆, la tension U1 atteint sa tension minimale U1min (par exemple 3,5 V). Le contrôleur 132 le détecte et commande le commutateur 131 pour que le panneau photovoltaïque 106 charge le premier super-condensateur SC1, à la place du deuxième super-condensateur SC2, lorsque l'éclairage reviendra.

À un instant t₇, l'éclairage revient le premier super-condensateur SC1 est alors chargé par le panneau photovoltaïque 106. Pendant la charge, le système de suivi 122 est alimenté électriquement par l'intermédiaire du premier super-condensateur SC1 et/ou directement par l'intermédiaire de la capacité C.

À un instant t₈, l'éclairage s'arrête et le premier condensateur SC1 se décharge pour alimenter électriquement le système de suivi 122. Il est supposé que l'obscurité se maintient pendant longtemps.

À un instant t₉, la tension Uₐₗᵢₘ atteint le seuil M1. L'unité de traitement 123 le détecte et cesse de solliciter le module de synchronisation 126 pour synchroniser l'horloge locale 124 avec l'horloge externe. De préférence, l'unité de traitement 123 désactive le module de synchronisation 126, par exemple en le déconnectant de l'étage d'entrée 136. L'horloge 100 est ainsi dans son premier mode d'économie d'énergie, où l'unité de traitement 123 ne suit l'heure qu'à partir de l'horloge locale 124.

À un instant t₁₀, la tension U1 atteint la tension U2. Le deuxième super-condensateur SC2 est alors connecté en parallèle du premier super-condensateur SC2, de sorte que les premier et deuxième super-condensateurs SC1, SC2 se déchargent pour alimenter électriquement le système de suivi 122. Les tensions Uₐₗᵢₘ, U1, U2 sont alors toutes égales.

À un instant t₁₁, la tension d'alimentation Uₐₗᵢₘ atteint le seuil M2 (par exemple 2 V). L'unité de traitement 123 le détecte et commence à surveiller la position des aiguilles 112, 114 pour calculer, par exemple à chaque nouvelle position prise, une énergie nécessaire pour les déplacer jusqu'à une position d'arrêt prédéfinie, par exemple toutes les deux à midi.

Par exemple, l'énergie nécessaire est donnée par : E = (Npm1 x Cm1) + (Npm2 x Cm2), où E est l'énergie pour mettre en position d'arrêt les deux aiguilles 112, 114, Npm1 est le nombre de positions de l'aiguille des heures 112 pour atteindre sa position d'arrêt, Cm1 est l'énergie prédéfinie (par exemple en Watt.seconde) d'un pas du moteur 118 associé à l'aiguille des heures 112 pour déplacer cette dernière d'une position horaire à la suivante, Npm2 est le nombre de positions de l'aiguille des minutes pour atteindre sa position d'arrêt, et Cm2 est l'énergie prédéfinie (par exemple en Watt.seconde) d'un pas du moteur 120 associé à l'aiguille des minutes 114 pour déplacer cette dernière d'une position horaire à la suivante.

Cette énergie E est traduite en une chute de la tension d'alimentation Uₐₗᵢₘ et une marge (par exemple 10%) est ajoutée, pour obtenir une chute de tension majorée de mise à l'arrêt.

À un instant t₁₂, lorsque la tension d'alimentation Uₐₗᵢₘ devient inférieure à un seuil M2' égal au seuil M3 plus la chute de tension majorée, l'unité de traitement 123 commande le système d'affichage 110 pour déplacer les aiguilles à leurs positions d'arrêt, puis cesse de commander le système d'affichage 110. C'est le deuxième mode d'économie d'énergie, où la synchronisation et la mise à jour de l'affichage sont désactivées.

À un instant t₁₃, la tension d'alimentation Uₐₗᵢₘ atteint le seuil M3 (par exemple 1,8 V). L'unité de traitement 123 le détecte et enregistre, dans sa mémoire non volatile, les instants de synchronisation et leurs compteurs d'échec associés. C'est le troisième mode d'économie d'énergie, où seule l'horloge locale 124 est active.

À un instant ultérieur, la tension d'alimentation Uₐₗᵢₘ devient trop faible (elle atteint par exemple 1,6 V) pour alimenter électriquement l'horloge locale 124, qui s'éteint. La mémoire volatile de l'horloge locale 124 n'est donc plus alimentée électriquement, de sorte que le bit de fiabilité enregistré dedans passe à « zéro ».

Lorsque l'éclairage revient, le premier super-condensateur SC1 est alors chargé par le panneau photovoltaïque 106. La tension d'alimentation Uₐₗᵢₘ est égale à la tension U1 et remonte. Comme le deuxième super-condensateur SC2 n'est pas chargé, la tension U1 peut remonter plus vite, ce qui permet un redémarrage rapide de l'horloge 100.

Lorsque la tension d'alimentation Uₐₗᵢₘ atteint le seuil M3 (par exemple 1,8 V), l'unité de traitement 123 s'allume. L'unité de traitement 123 vérifie alors par exemple si l'heure de l'horloge locale 124 est fiable ou non, par exemple en détectant si le bit de fiabilité est à « un » (heure fiable) ou bien à « zéro » (heure non fiable).

Si l'heure locale est fiable, l'unité de traitement 123 surveille la tension d'alimentation Uₐₗᵢₘ et détecte lorsque qu'elle atteint le seuil M2 (par exemple 2 V) pour s'assurer que la tension d'alimentation Uₐₗᵢₘ est suffisante pour mettre à jour l'affichage. L'unité de traitement 123 commande alors le système d'affichage 110 afin de mettre à jour l'affichage de l'heure à partir de l'horloge locale 124.

Si l'heure locale n'est pas fiable, l'unité de traitement 123 surveille par exemple la tension d'alimentation Uₐₗᵢₘ et détecte lorsque qu'elle atteint un seuil M, de préférence compris entre les seuils M2 et M1 (par exemple 2,2 V), pour s'assurer que la tension d'alimentation Uₐₗᵢₘ est suffisante pour permettre une synchronisation. L'unité de traitement 123 réalise alors une synchronisation exceptionnelle (en dehors des instants de synchronisation prévus) pour synchroniser l'horloge locale 124 à l'horloge externe. Puis, l'unité de traitement 123 commande le système d'affichage 110 afin de mettre à jour l'affichage de l'heure à partir de l'horloge locale 124. Par la suite, l'unité de traitement 123 synchronise l'horloge locale 124 à l'horloge externe aux instants de synchronisation prévus et enregistrés dans la mémoire non volatile.

Ainsi, en utilisation normale, le premier super-condensateur SC1 est alternativement chargé et déchargé, tandis que le deuxième super-condensateur SC2 n'est que ponctuellement chargé. Or, un super-condensateur est endommagé par des cycles de charge/décharge, ce qui fait baisser sa capacité. C'est le cas du premier super-condensateur SC1. En revanche, le deuxième super-condensateur SC2 ne subit que peu de cycles de charge/décharge, puisqu'il n'est utilisé que ponctuellement, lorsque le premier super-condensateur SC1 ne comporte plus beaucoup d'énergie, comme cela sera expliqué par la suite. Ainsi, la capacité du deuxième super-condensateur SC2 reste sensiblement constante dans le temps, ce qui lui permet d'être utilisé sur une longue période.

## Revendications

1. Horloge (100) comportant :
- un système (122, 110) de suivi et d'affichage de l'heure ;
- un premier super-condensateur (SC1) ;
- un panneau photovoltaïque (106) ; et
- un système de charge (128) conçu pour charger le premier super-condensateur (SC1) à partir du panneau photovoltaïque (106) ;
- un deuxième super-condensateur (SC2), le système de charge (128) étant en outre conçu pour charger le deuxième super-condensateur (SC2) à partir du panneau photovoltaïque (106) ; et
- un mélangeur (134) conçu pour mettre en oeuvre, en l'absence d'éclairement, une stratégie de charge suivante :
• lorsqu'une tension (U1) du premier super-condensateur (SC1) est supérieure à un certain niveau (U2), connecter le premier super-condensateur (SC1), mais pas le deuxième super-condensateur (SC2), au système de suivi et d'affichage (122, 110) pour alimenter électriquement ce dernier à partir du premier super-condensateur (SC1) mais pas du deuxième super-condensateur (SC2), et
• lorsque la tension (U1) du premier super-condensateur (SC1) est égale au niveau (U2), connecter le deuxième super-condensateur (SC2) en plus du premier super-condensateur (SC1) au système de suivi et d'affichage (122, 110) pour alimenter électriquement ce dernier à partir des premier et deuxième super-condensateurs (SC1, SC2) ;
et en ce que :
- le système de suivi et d'affichage (122, 110) comporte un système (110) d'affichage de l'heure et un système (122) de suivi de l'heure, ce dernier étant conçu pour commander le système d'affichage (110) pour afficher l'heure et, lorsque les premier et deuxième super-condensateurs (SC1, SC2) sont déchargés sous un certain seuil (M2'), cesser de commander le système d'affichage (110) tout en continuant de suivre l'heure ; et/ou
- le système de suivi et d'affichage (110, 122) comporte un module (126) de synchronisation sans fil à une horloge externe, et le système de suivi et d'affichage (122, 110) est conçu pour, lorsque les premier et deuxième super-condensateurs (SC1, SC2) sont déchargés sous un certain seuil (M1), cesser d'utiliser le module de synchronisation (126).

2. Horloge (100) selon la revendication 1, dans laquelle le mélangeur (134) est conçu pour mettre en œuvre la stratégie de charge indépendamment d'une différence de nombres de cycles de charge et décharge entre les premier et deuxième super-condensateurs (SC1, SC2).

3. Horloge (100) selon la revendication 1 ou 2, dans laquelle le mélangeur (134) est conçu pour mettre en œuvre uniquement la stratégie de charge, mais pas d'autre stratégie de charge.

4. Horloge (100) selon l'une quelconque des revendications 1 à 3, dans laquelle le niveau est une tension (U2) du deuxième super-condensateur (SC2).

5. Horloge (100) selon l'une quelconque des revendications 1 à 4, dans laquelle le mélangeur (134) comporte une diode pour chacun des premier et deuxième super-condensateurs (SC1, SC2), passante en direction du système de suivi et d'affichage de l'heure (122, 110).

6. Horloge (100) selon l'une quelconque des revendications 1 à 5, dans laquelle le système de charge (128) est conçu pour charger le premier super-condensateur (SC1) à une tension maximale (U1max).

7. Horloge (100) selon la revendication 6, dans laquelle le système de charge (128) est conçu pour charger le deuxième super-condensateur (SC2) à une tension maximale (U2max) inférieure à la tension maximale (U1max) du premier super-condensateur (SC1).

8. Horloge (100) selon la revendication 7, dans laquelle la tension maximale (U2max) du deuxième super-condensateur (SC2) est inférieure à une tension nominale du deuxième super-condensateur (SC2).

9. Horloge (100) selon l'une quelconque des revendications 6 à 8, dans laquelle le système de charge (128) est conçu pour charger le premier super-condensateur (SC1) puis, lorsque le premier super-condensateur (SC1) est chargé à sa tension maximale (U1max), pour charger le deuxième super-condensateur (SC2).

10. Horloge (100) selon l'une quelconque des revendications 1 à 9, dans laquelle le système de suivi et d'affichage (122, 110) comporte des aiguilles (112, 114) et est conçu pour mesurer une luminosité ambiante de l'horloge (100) et afficher la luminosité en utilisant une des aiguilles (112, 114).

11. Horloge (100) selon la revendication 10, dans laquelle le panneau photovoltaïque (106) est organique et dans laquelle le système de suivi et d'affichage (110, 122) est conçu pour mesurer la luminosité à partir d'une tension (U_{PV}) fournie par le panneau photovoltaïque (106).

## Patentansprüche

1. Uhr (100), umfassend:
- ein System (122, 110) zum Nachverfolgen und zum Anzeigen der Uhrzeit;
- einen ersten Superkondensator (SC1);
- ein Photovoltaik-Paneel (106); und
- ein Ladesystem (128), konzipiert zum Laden des ersten Superkondensators (SC1) ausgehend von dem Photovoltaik-Paneel (106);
- einen zweiten Superkondensator (SC2), wobei das Ladesystem (128) weiter konzipiert ist zum Laden des zweiten Superkondensators (SC1) ausgehend von dem Photovoltaik-Paneel(106);
- einen Mischer (134), konzipiert, um bei Abwesenheit von Beleuchtung eine folgende Ladestrategie zu implementieren:
- wenn eine Spannung (U1) des ersten Superkondensators (SC1) höher als ein gewisses Niveau (U2) ist, Verbinden des ersten Superkondensators (SC1), aber nicht des zweiten Superkondensators (SC2), mit dem System zum Nachverfolgen und zum Anzeigen (122, 110) zum elektrischen Versorgen von letzterem ausgehend von dem ersten Superkondensator (SC1) aber nicht dem zweiten Superkondensator (SC2), und
- wenn die Spannung (U1) des ersten Superkondensators (SC1) gleich einem Niveau (U2) ist, Verbinden des zweiten Superkondensators (SC2) zusätzlich zu dem ersten Superkondensators (SC1) mit dem System zum Nachverfolgen und zum Anzeigen (122, 110) zum elektrischen Versorgen von letzterem ausgehend von dem ersten und dem zweiten Superkondensator (SC1, SC2);
und dadurch, dass:
- das System zum Nachverfolgen und zum Anzeigen (122, 110) ein System zum Anzeigen (110) der Uhrzeit und ein System (122) zum Nachverfolgen der Uhrzeit umfasst, wobei letzteres konzipiert ist zum Steuern des Systems zum Anzeigen (110) zum Anzeigen der Uhrzeit, und wenn der erste und der zweite Superkondensator (SC1, SC2) unter einen gewissen Schwellenwert (M2') entladen sind, damit aufzuhören, das System zum Anzeigen (110) zu steuern, während die Uhrzeit weiterhin nachverfolgt wird; und/oder
- das System zum Nachverfolgen und zum Anzeigen (122, 110) ein Modul (126) zur drahtlosen Synchronisation mit einer externen Uhr umfasst, und das System zum Nachverfolgen und zum Anzeigen (122, 110) konzipiert ist, um, wenn der erste und der zweite Superkondensator (SC1, SC2) unter einen gewissen Schwellenwert (M1) entladen sind, damit aufzuhören, das Modul zur drahtlosen Synchronisation (126) zu verwenden.

2. Uhr (100) nach Anspruch 1, wobei der Mischer (134) konzipiert ist zum Implementieren der Ladestrategie unabhängig von einer Differenz der Anzahl von Lade- und Entladezyklen zwischen dem ersten und dem zweiten Superkondensator (SC1, SC2).

3. Uhr (100) nach Anspruch 1 oder 2, wobei der Mischer (134) einzig zum Implementieren der Ladestrategie, aber keiner anderen Ladestrategie, konzipiert ist.

4. Uhr (100) nach einem der Ansprüche 1 bis 3, wobei das Niveau eine Spannung (U2) des zweiten Superkondensators (SC2) ist.

5. Uhr (100) nach einem der Ansprüche 1 bis 4, wobei der Mischer (134) für jeden des ersten und des zweiten Superkondensators (SC1, SC2) eine Diode umfasst, die in Richtung des Systems zum Nachverfolgen und zum Anzeigen der Uhrzeit (122, 110) durchlässig ist.

6. Uhr (100) nach einem der Ansprüche1 bis 5, wobei das System zum Laden (128) konzipiert ist zum Laden des ersten Superkondensators (SC1) auf eine maximale Spannung (U1 max).

7. Uhr (100) nach Anspruch 6, wobei das System zum Laden (128) konzipiert ist zum Laden des zweiten Superkondensators (SC2) auf eine maximale Spannung (U2 max), die niedriger ist als die maximale Spannung (U1 max) des ersten Superkondensators (SC1).

8. Uhr (100) nach Anspruch 7, wobei die maximale Spannung (U2 max) des zweiten Superkondensators (SC2) niedriger ist als eine Nennspannung des zweiten Superkondensators (SC2).

9. Uhr (100) nach einem der Ansprüche 6 bis 8, wobei das System zum Laden (128) konzipiert ist zum Laden des ersten Superkondensators (SC1), danach, wenn der erste Superkondensator (SC1) auf seine maximale Spannung (U1 max) geladen ist, zum Laden des zweiten Superkondensators (SC2).

10. Uhr (100) nach einem der Ansprüche 1 bis 9, wobei das System zum Nachverfolgen und zum Anzeigen (122, 110) Uhrzeiger (112, 114) umfasst und konzipiert ist zum Messen einer Umgebungslichtstärke der Uhr (100) und Anzeigen der Lichtstärke unter Verwendung der Uhrzeiger (112, 114).

11. Uhr (100) nach Anspruch 10, wobei das Photovoltaik-Paneel(106) organisch ist und wobei das System zum Nachverfolgen und zum Anzeigen (110, 122) konzipiert ist zum Messen der Lichtstärke ausgehend von einer Spannung (U_{PV}), die von dem Photovoltaik-Paneel (106) bereitgestellt wird.

## Claims

1. A clock (100) comprising:
- a system (122, 110) for tracking and displaying the time;
- a first supercapacitor (SC1);
- a photovoltaic panel (106); and
- a charging system (128) configured to charge the first supercapacitor (SC1) from the photovoltaic panel (106);
- a second supercapacitor (SC2), the charging system (128) being further configured to charge the second supercapacitor (SC2) from the photovoltaic panel (106); and
- a mixer (134) configured to implement, in the absence of illumination, the following charging strategy:
• when a voltage (U1) of the first supercapacitor (SC1) is greater than a certain level (U2), connect the first supercapacitor (SC1), but not the second supercapacitor (SC2), to the tracking and display system (122, 110) to power the latter from the first supercapacitor (SC1) but not from the second supercapacitor (SC2), and
• when the voltage (U1) of the first supercapacitor (SC1) is equal to the level (U2), connecting the second supercapacitor (SC2) in addition to the first supercapacitor (SC1) to the tracking and display system (122, 110) to supply power to the latter from the first and second supercapacitors (SC1, SC2);
and in that:
- the tracking and display system (122, 110) comprises a time display system (110) and a time tracking system (122), the latter being designed to control the display system (110) to display the time and, when the first and second supercapacitors (SC1, SC2) are discharged below a certain threshold (M2'), to cease controlling the display system (110) while continuing to track the time; and/or
- the tracking and display system (110, 122) comprises a wireless synchronization module (126) for synchronizing with an external clock, and the tracking and display system (122, 110) is configured to, when the first and second supercapacitors (SC1, SC2) are discharged below a certain threshold (M1), cease using the synchronization module (126).

2. The clock (100) according to claim 1, wherein the mixer (134) is configured to implement the charging strategy independently of a difference in the number of charge and discharge cycles between the first and second supercapacitors (SC1, SC2).

3. The clock (100) according to claim 1 or 2, wherein the mixer (134) is configured to implement only the charging strategy, but no other charging strategy.

4. The clock (100) according to any one of claims 1 to 3, wherein the level is a voltage (U2) of the second supercapacitor (SC2).

5. The clock (100) according to any one of claims 1 to 4, wherein the mixer (134) comprises a diode for each of the first and second supercapacitors (SC1, SC2), forward-biased toward the time tracking and display system (122, 110).

6. The clock (100) according to any one of claims 1 to 5, wherein the charging system (128) is configured to charge the first supercapacitor (SC1) to a maximum voltage (U1max).

7. The clock (100) according to claim 6, wherein the charging system (128) is configured to charge the second supercapacitor (SC2) to a maximum voltage (U2max) lower than the maximum voltage (U1max) of the first supercapacitor (SC1).

8. The clock (100) according to claim 7, wherein the maximum voltage (U2max) of the second supercapacitor (SC2) is lower than a nominal voltage of the second supercapacitor (SC2).

9. The clock (100) according to any one of claims 6 to 8, wherein the charging system (128) is configured to charge the first supercapacitor (SC1) and then, when the first supercapacitor (SC1) is charged to its maximum voltage (U1max), to charge the second supercapacitor (SC2).

10. The clock (100) according to any one of claims 1 to 9, wherein the tracking and display system (122, 110) includes hands (112, 114) and is configured to measure ambient brightness of the clock (100) and display the brightness using one of the hands (112, 114).

11. The clock (100) according to claim 10, wherein the photovoltaic panel (106) is organic, and wherein the tracking and display system (110, 122) is configured to measure brightness based on a voltage (U_{PV}) supplied by the photovoltaic panel (106).
